# EUROPEAN PATENT APPLICATION

(11) **EP 4 737 277 A1**
(43) Date of publication of application: **06.05.2026**
(21) Application number: 25211592.8
(22) Date of filing: 28.10.2025
(51) Int. Cl.: B62D 33/04, B62D 63/06, B62D 21/20, B62D 27/06

(54) **TRAILER BOX COMPRISING IMPROVED CONNECTION PROFILES FOR CONNECTING THE BOX LONGITUDINAL SIDE WALLS TO A BOX LOWER STRUCTURE**

(30) Priority: 31.10.2024 IT 202400024516
(71) Applicant: Tecnokar Trailers S.r.l., 06049 Spoleto (PG) (IT)
(72) Inventor: LUZZI, Graziano, 06049 SPOLETO (PG) (IT); MARI, Roberto, 06049 SPOLETO (PG) (IT); MAGNINI, Danilo, 06034 FOLIGNO (PG) (IT)
(74) Representative: Baldi, Claudio

(57) **Abstract**

A trailer box (100) comprises a lower structure (8) comprising crosspieces (81) suitable for being fixed above a chassis (6) of the trailer and a floor (82) mounted on the crosspieces (81), two opposing longitudinal side walls (7) and two metal connection profiles (1), each one connecting a side wall (7) to end sections (810) of the crosspieces (81); wherein the metal connection profiles (1) are connected to the crosspieces (81) by means of removable threaded connection means (30).

## Description

The present patent application for industrial invention relates to a trailer box comprising improved connection profiles for connecting the box longitudinal side walls to a box lower structure.

The features and advantages of the present invention will become more apparent following a brief description of the prior art and its functional limitations.

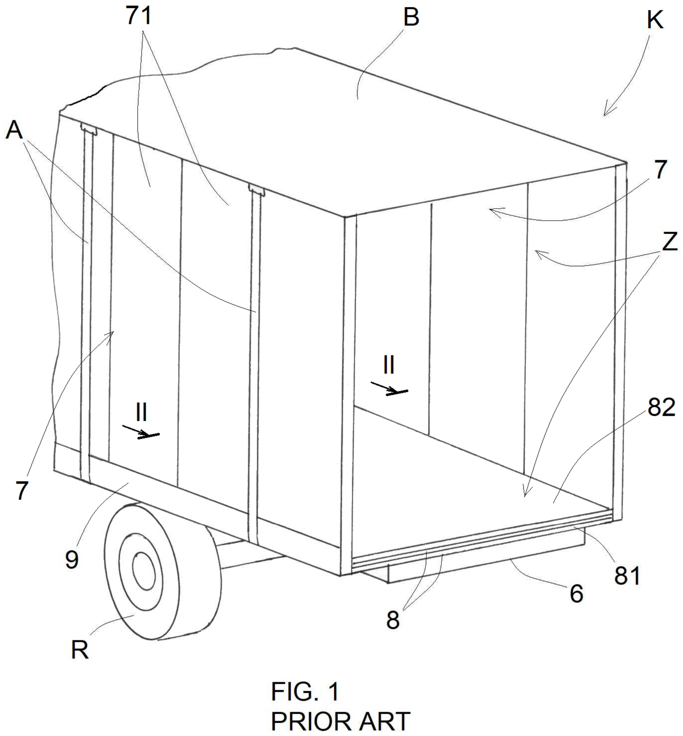

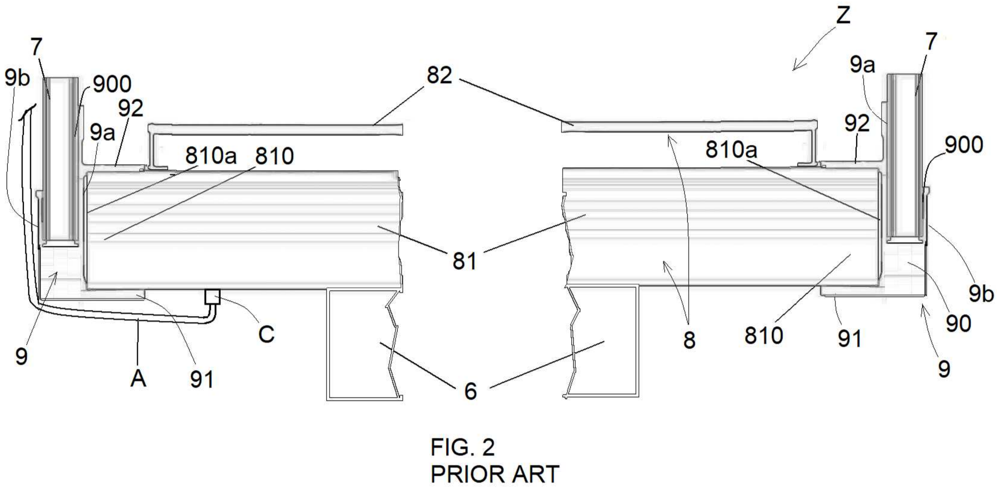

Figs. 1 and 2 "Prior art" schematically show a trailer that is generally indicated with the reference letter (K).

A trailer (K) is a means of transportation that has at least one pair of idler wheels and is suitable for being attached to a motor vehicle, such as a truck, by means of quick coupling/uncoupling means.

A conventional trailer (K) comprises a chassis (6) supported by wheels (R) and a box (Z) mounted on the chassis (6).

In Figures 1 and 2, the chassis (6) of the trailer (K) is schematically shown as a single block, however, the chassis (6) generally comprises a structure consisting of two longitudinal side-members that are transversely connected to each other by means of various types of elements (crosspieces, etc.). The chassis (6) superiorly supports the box (Z) that is suitable for containing the goods to be transported, and inferiorly acts as a support for the road-side part of the trailer (K) (suspensions, etc.).

The box (Z) comprises a lower structure (8) comprising crosspieces (81) fixed on the chassis (6) of the trailer (K) that extend perpendicularly to the trailer (K). The lower support structure (8) also comprises a floor (82) mounted on the crosspieces (81). The floor (82) may be a mobile floor, commonly referred to as a "walking floor," consisting of a plurality of slats arranged lengthwise in the trailer, side by side and parallel to each other, and configured to move back and forth longitudinally, driven by a hydraulic transmission that is usually located under the chassis of the trailer. The slats rest on the crosspieces (81) fixed to the chassis (6) of the trailer (K), and therefore the crosspieces (81) basically act as spacers between the floor (82) (composed of the slats) and the chassis (6) of the trailer (K).

The crosspieces (81) have end sections (810) that protrude laterally from the chassis (6) of the trailer (K), ending with a flat end section (810a).

The box (Z) of the trailer (K) also comprises two opposite longitudinal side walls (7), each one consisting of a plurality of profiles (71) or sheets, a front wall, close to the cab of the truck, and one or more rear doors that close a loading/unloading opening of the box (Z) of the trailer (K).

A cover (B) is provided in upper position, astride the two longitudinal side walls (7), said cover (B) comprising a sheet that superiorly covers the interior of the box (Z) of the trailer (K). The cover (B) is fixed on one side to the top of one of the two longitudinal side walls (7) and on the other side to tensioning straps (A), which are in turn tensioned by means of ratchets or tensioning means (C) mounted under the crosspieces (81).

Each longitudinal side wall (7) is connected to the crosspieces (81) of the lower structure (8) by means of a connection profile (9) shown in particular in Fig. 2.

The connection profile (9) comprises:
- a body (90) having a first face (9a) facing the interior of the box (100), a second face (9b) facing outwards, and a groove (900) facing upwards wherein a lower end of the longitudinal side wall (7) is inserted and welded (more precisely, the lower edges of the profiles (71) that make up the longitudinal side wall (7) are inserted and welded inside the groove (900)); and
- a lower shelf (91) and an upper shelf (92) which are parallel to each other and protrude orthogonally from the first face (9a) of the body (10) and between which the end sections (810) of the crosspieces (81) are inserted and welded.

The applicant has noted that a box (Z) equipped with similar connection profiles (9) is impaired by various problems, which will be described below.

Firstly, it should be noted that various forces, such as vibration forces, weight forces of the side wall, bending forces caused by impacts of the load on the walls and dynamic forces generated when the trailer makes a turn, are discharged at the welds that secure the connection profile (9) to the crosspieces (81). Therefore, the connection area between the connection profile (9) and the crosspieces (81) is one of the most critical areas of the box (Z), and it is therefore necessary that the welds be performed with extreme care and precision, as any imperfections may generate cracks over time that affect the stability of the connection between the connection profile (9) and the crosspieces (81).

Furthermore, it should be noted that in many cases it is preferable to give the two longitudinal side walls (7) a slight inclination towards the interior of the box (Z) in order to counteract the outward bending caused by the goods loaded inside the box (Z).

To achieve such an inclination, it is necessary that, when welding the connection profile (9) to the crosspiece (81), the connection profile (9) is slightly and constantly bent inwards and that a specific, complicated welding sequence of the upper shelf (92) and of the lower shelf (91) is performed. Such an operation is quite complex and inevitably increases the time required to manufacture the box (Z).

In addition to the aforementioned problems arising from the welding of the connection profile (9) to the crosspieces (81), as shown in Fig. 2, the connection profile (9) also causes further inconveniences.

Firstly, the connection profile (9) forces the tensioning straps (A) to pass externally relative to the connection profile (9) and externally relative to the longitudinal side walls (7) of the box (Z) of the trailer (K), said tensioning straps (A) being both dangerous and noisy when the trailer (K) is in motion and travels at high speeds, such as on the highway.

Furthermore, the applicant has also noted that the shape of the connection profile (9) causes problems during the painting and sandblasting of the box (Z) of the trailer (K).

In fact, the sandblasting and painting of the box (Z) must be carried out on the side walls and doors of the box (Z), without affecting the chassis (6) of the trailer (K), as mechanisms (such as the hydraulic system that moves the slats or other parts of the trailer (K)) are provided on the sides and under the chassis (6), with the risk of being damaged if they are hit by the product sprayed during painting or sandblasting.

To avoid such a risk, the operators in charge of painting or sandblasting the box (Z) of the trailer (K) must perform these operations with great precision and caution when they are near the connection profile (9), thus converting painting or sandblasting into a long, complicated task.

The purpose of the present invention is to overcome the drawbacks of the prior art by devising a trailer box wherein the connection between the connection profile and the crosspieces is secure, reliable and reversible, meaning that the connection profile and the crosspieces can be quickly and easily disconnected from each other, if necessary.

Another purpose of the present invention is to devise a trailer wherein, during the assembly of the box, the connection profile undergoes a selfdeformation, thus allowing the side walls to be tilted inwards towards the interior of the box in a simple, quick, and completely automatic manner.

Another purpose of the present invention is to devise a trailer box wherein the tensioning straps of the trailer are not required to pass externally relative to the profile and the side walls of the box.

A further purpose of the present invention is to devise a trailer box with connection profiles arranged in such a way as to support sheets that inferiorly cover the trailer during the sandblasting or painting operations of the trailer box.

These purposes are achieved in accordance with the invention with the characteristics listed in the attached independent claim 1.

Advantageous embodiments appear from the dependent claims.

The box according to the invention is defined by claim 1.

For greater clarity, the description of the box according to the invention continues with reference to the attached drawings, which are for illustrative purposes only and are not limiting, wherein:
Fig. 1 Prior Art is a perspective rear view of a portion of a conventional trailer;
Fig. 2 Prior Art is a cross-sectional view of the trailer box of Fig. 1, taken along the section plane II-II of Fig. 1;
Fig. 3 is a cross-sectional view of a part of a trailer box according to the invention, taken along a vertical plane orthogonal to the longitudinal axis of the box;
Fig. 3A is a sectional view of Fig. 3 taken along the plane III-III of Fig. 3;
Fig. 3B is the same as Fig. 3A, but with the elements separated from each other;
Fig. 4 is a perspective view of a lower node of the box according to the invention, wherein a side wall of the trailer and crosspieces of a lower structure of the box are connected to each other;
Fig. 5 is a cross-sectional view of a connection profile of the box according to the invention;
Fig. 5A is a schematic axonometric view of a portion of the connection profile of the box according to the invention and of crosspieces of the lower structure of the box suitable for being fitted between two shelves of the connection profile;
Fig. 6 is a sectional view of a lower part of the box according to the invention, wherein two protective sheets are mounted on the two connection profiles to cover and protect the chassis that supports the box during sandblasting or painting operations;
Fig. 7 is a cross-sectional view of a lower node of the box integrated with a tensioning strap for tensioning an upper cover suitable for covering the box.

Hereafter, elements identical or corresponding to those already described are indicated with the same reference numerals, omitting their detailed description.

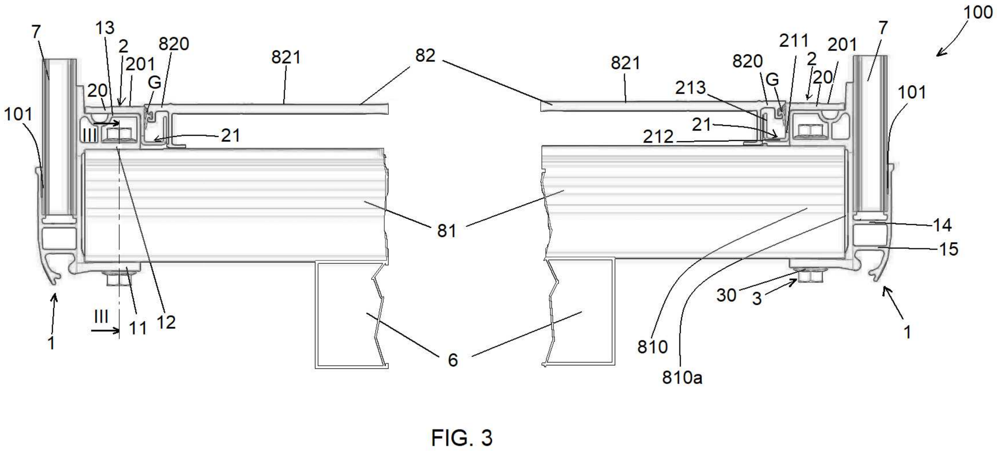

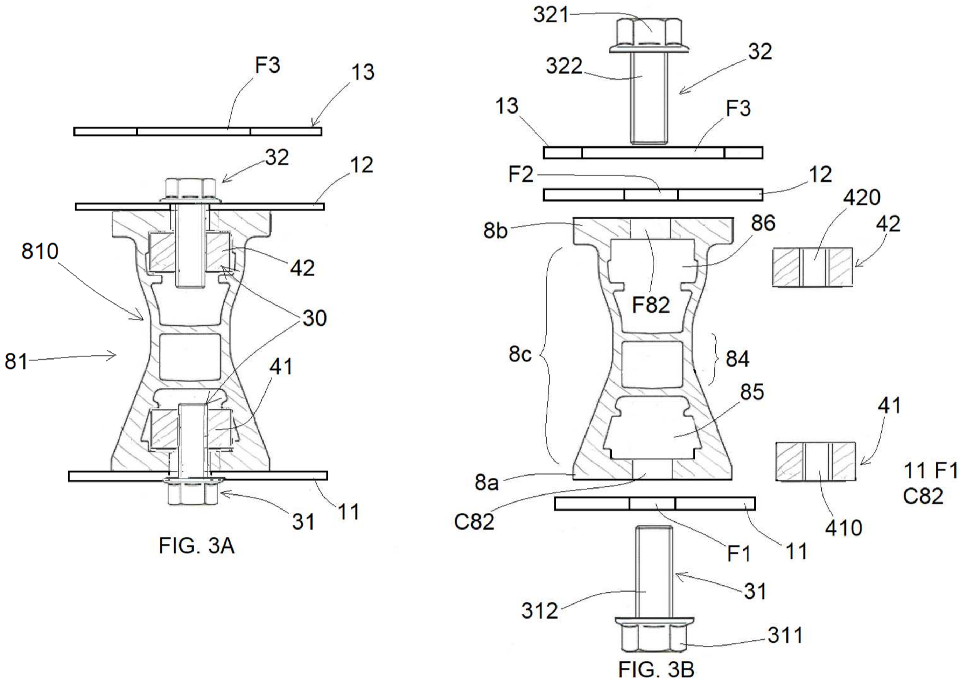

With reference to Figs. 3 to 7, a trailer box according to the invention is described, which is generally indicated with the reference numeral "100".

The box (100) according to the invention has essentially the same structural design as the box (Z) of the prior art, except that the new box (100) is provided with new, special connection profiles (1) which are connected to the crosspieces (81) not by means of welding, as in the prior art, but by means of various connection means (3).

It should therefore be noted that the description of the elements of the box (100) that have already been described above and are not of particular relevance and interest for the purposes of the present invention will be omitted below.

With reference to Figs. 3, 4, and 5, the box (100) comprises two new connection profiles (1), each one connecting a corresponding longitudinal side wall (7) to the crosspieces (81) of the lower structure (8) mounted above the chassis (6) of the trailer.

Each connection profile (1) comprises a main body (10) comprising a first face (1a) facing the interior of the box (100) and a second face (1b) facing the exterior of the box (100), as well as an upward-facing groove (101) wherein a lower end of a longitudinal side wall (7) is inserted and welded (more precisely, the end edges of the profiles (71) that form the longitudinal side wall (7) are inserted and welded inside the groove (101)).

More precisely, the body (10) has an inner side wall (10a) whereon the first face (1a) is formed, an outer side wall (10b) whereon the second face (1b) is formed, and at least one transverse partition (14, 15) connecting the inner side wall (10a) and the outer side wall (10b) to each other.

In particular, the body (10) comprises an upper partition (14) and a lower partition (15) parallel to each other.

The upward-facing groove (101) is bounded laterally by the outer side wall (10b) and by the inner side wall (10a), whereas it is bounded inferiorly by the upper partition (14).

The connection profile (1) also comprises a lower shelf (11) and an upper shelf (12) which protrude from the first face (1a) and between which the end sections (810) of the crosspieces (81) are inserted.

The connection means (3) that connect the connection profile (1) to the crosspieces (81) comprise removable threaded connection means (30) applied between the shelves (11, 12) and the end sections (810) of the crosspieces (81).

It is clear that the threaded connection means (30) that connect the connection profile (1) to the ends of the crosspieces (81) allow for the quick and easy replacement of the connection profiles (1) in the event of damage or deformation suffered by the connection profiles (1) or by the crosspieces (81).

With reference to Figs. 3 and 3A, each crosspiece (81) comprises:
- a lower portion (8a) having a flat surface against which the lower shelf (11) of the connection profile (1) is suitable for abutting;
- an upper portion (8b) having a flat surface against which the upper shelf (12) of the connection profile (1) is suitable for abutting;
- a connection portion (8c) connecting the lower portion (8a) to the upper portion (8b).

The connection portion (8c) of the crosspiece has a central part (84) located at halfway the height of the connection portion. When seen in a cross-section, the connection portion (8c) has two side flanks with a concave profile, with outward-facing concavity. Otherwise said, when seen in cross-section, the connection portion (8c) has a tapered shape with dimensions decreasing from the lower portion (8a) to the central part (84) of the connection portion (8c) and from the upper portion (8b) to the central part (84) of the connection portion (8c).

The crosspiece (81) has a lower seat (85) that extends into the connection portion (8c), above the lower portion (8a) of the crosspiece (81). The lower seat (85) extends longitudinally into the connection portion (8c) for the entire length of the crosspiece.

The crosspiece (81) has an upper seat (86) that extends into the connection portion (8c) under the upper portion (8b). The upper seat (86) extends longitudinally along the entire length of the crosspiece (81).

The upper portion (8b) has two holes (F82) formed at the two end sections (810) of the crosspiece (81) in communication with the upper seat (86).

The lower portion (8a) has a longitudinal channel (c82) in communication with the lower seat (85) of the crosspiece (81), which extends along the entire length of the crosspiece (81).

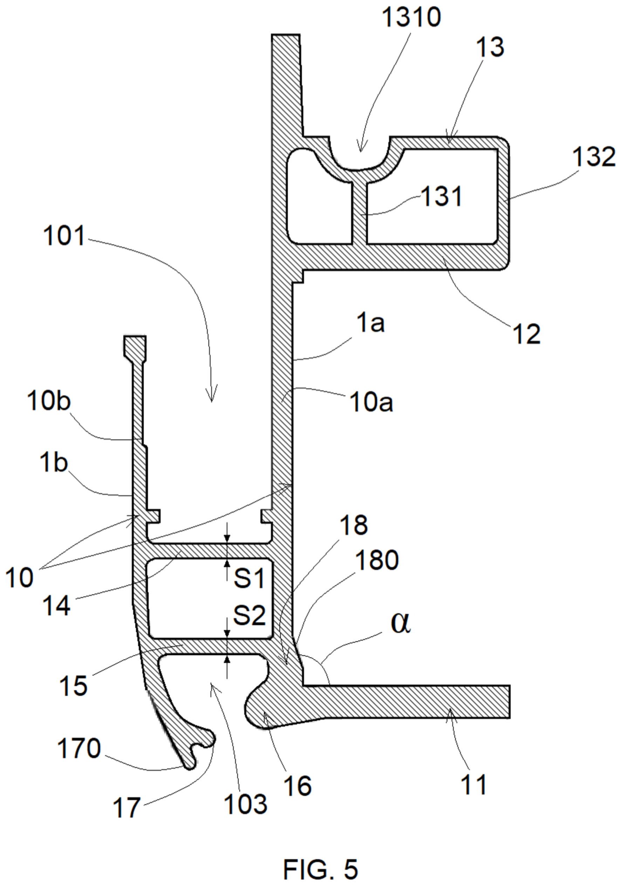

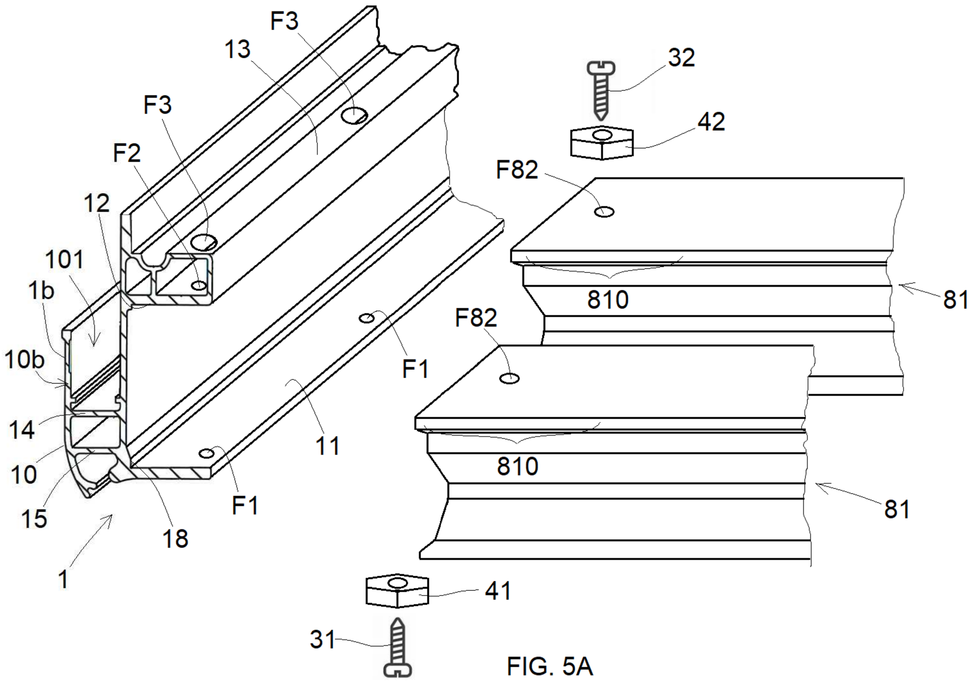

With reference to Figs. 3A, 3B, and 5A, holes (F1, F2) are drilled in the shelves (11, 12) of the connection profile (1).

The holes (F2) drilled on the upper shelf (12) are coaxial to the holes (F82) drilled on the upper portions (8b) of the crosspieces (81).

The holes (F1) drilled on the lower shelf (11) are aligned with the longitudinal channels (c82) formed on the lower portions (8a) of the crosspieces (81).

The removable threaded connection means (30) comprise threaded blocks (41, 42) and screws (31, 32). In particular, the removable threaded connection means (30) comprise upper threaded blocks (42) and lower threaded blocks (41), lower screws (31) and upper screws (32).

Each threaded block (41, 42) has a threaded hole (410, 420), whereas each screw (31, 32) has a threaded shank (312, 322) and a head (311, 321).

The lower threaded blocks (41) are inserted into the lower seats (85) of the crosspieces.

The upper threaded blocks (42) are inserted into the upper seats (86) of the crosspieces.

The threaded shank (312) of each lower screw (31) passes through the lower shelf (11) of the connection profile (1) and the lower portion (8a) of the crosspiece (81) and is screwed into the threaded hole (410) of the respective lower threaded block (41).

More precisely, the threaded shank (312) of each lower screw (31) is inserted through the hole (F1) in the lower shelf (11), into the longitudinal channel (c82) of the crosspiece and is screwed into the threaded hole (410) of the lower block until the head (311) of the lower screw (31) abuts under the lower shelf (11) of the connection profile (1).

The threaded shank (322) of each upper screw (32) passes through the upper shelf (12) of the connection profile (1) and the upper portion (8b) of the crosspiece (81) and is screwed into the threaded hole (420) of the respective upper threaded block (42).

More precisely, the threaded shank (322) of each upper screw (32) is inserted through the hole (F2) in the upper shelf (12), into the hole (F82) of the crosspiece and is screwed into the threaded hole (420) of the upper threaded block (42) until the head (321) of the upper screw (32) abuts above the upper shelf (12) of the connection profile (1).

Taking advantage of the aforementioned connection with removable threaded connection means (30), the applicant has also adopted special measures for the connection profiles (1) in order to tilt them slightly toward the interior of the box (100) when the removable threaded connection means (30) are tightened.

The devices provided on the connection profile (1) in order to automatically tilt said connection profile (1) when the threaded connection means (30) are tightened are shown in Fig. 5, which shows the connection profile (1) before being fixed to the crosspieces (81) by means of the removable threaded connection means (30).

With reference to Fig. 5, the connection profile (1) has the following features:
- the body (10) of the connection profile (1) has a protruding portion (18) that protrudes from the first face (1a) of the connection profile above and close to the lower shelf (11) and comprises a flat stop face (180) suitable for abutting against the end sections (810a) of the crosspieces (81);
- the upper shelf (12) extends orthogonally with respect to the plane whereon the stop face (180) of the protruding portion (18) lies; and
- the lower shelf (11) is inclined by an acute angle (α) with respect to the plane whereon the stop face (180) of the protruding portion (18) lies when the lower shelf (11) is not tightened with the nuts (4).

Preferably, the acute angle (α) is comprised between 88° and 89.6° when the lower shelf (11) is not tightened.

Thanks to the aforementioned characteristics, the lower shelf (11) is bent during use, following the tightening of the threaded connection means (30), with a consequent gradual increase of said angle (α) with respect to the value assumed by the same angle (α) when the lower shelf (11) is not tightened, and with a consequent inclination of said body (10) towards the interior of the box (100) in such a way that the longitudinal side wall (7) integral with said body (10) is arranged on a subvertical plane that is inclined towards the interior of the box (100).

Otherwise said, when the lower screws (31) are tightened, the lower shelf (11) is pressed against the end sections (810) of the crosspieces (81), causing a slight inward rotation of the body (10) of the connection profile (1) and of the longitudinal side wall (7) supported by it, which ends when the stop face (180) of the protruding portion (18) abuts against the end sections (810a) of the crosspieces (81).

Therefore, once the lower screws (31) are tightened, the body (10) rotates inward toward the box (100), thus allowing the entire longitudinal side wall (7) to be inclined inward toward the box (100), counteracting any outward bending induced by the goods loaded inside the box (100).

The applicant has found out that by tilting the lower shelf (11) with respect to the stop face of the protruding portion (18) of the angle (α) comprised between 88° and 89°, it is possible to bend the connection profile (1) during the tightening of the threaded connection means (30), such that the top of the longitudinal side wall (7) with respect to the base is moved towards the center of the box (100) by approximately 2-3 cm.

With reference to Figs. 5 and 5A, an additional shelf (13) is provided above the upper shelf (12), protruding from the first face (1a) of the body (10) and equipped with holes (F3) aligned with the holes (F2) of the upper shelf (12) which allow the passage of tools suitable for screwing and tightening the upper screws (32). The additional shelf (13) is connected to the upper shelf (12) by means of a vertical intermediate partition (131) and a vertical end partition (132). A concavity (1310) is provided above the vertical intermediate partition (131), said concavity (1310) being suitable for housing anchoring systems for ropes or similar loadretaining elements. The vertical intermediate partition (131) serves to structurally reinforce this area of the connection profile (1).

Advantageously, the body (10) of the connection profile (1) is provided with a groove (103) with a narrow longitudinal access opening that faces in the opposite direction to the groove (101) and is delimited by an inner lip (16) and an outer lip (17).

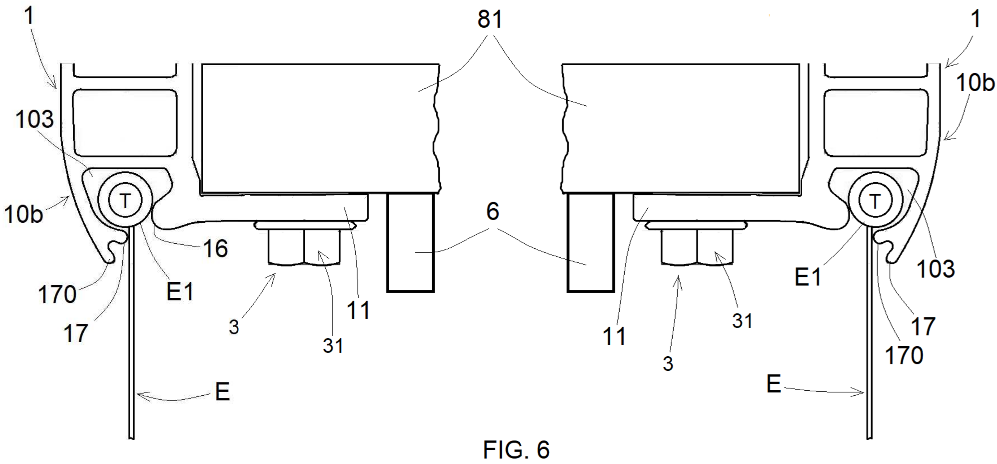

With reference to Fig. 6, the grooves (103) of the two connection profiles (1) are suitable for receiving and locking rubber rods (T) fitted into pockets (E1) located at the ends of opposite protective sheets (E). The rubber rods (T) are fixed to the pockets (E1).

In view of the above, during the painting or sandblasting of the box (100), it is possible to use the grooves (103) of the two connection profiles (1) as anchoring points for the rubber rods (T) so that the sheets (E) extend from the connection profile (1) to the ground below, covering and protecting the chassis (6), as well as the parts and mechanisms mounted under or to the side of the chassis (6).

With reference to Figs. 5 and 6, the outer side wall (10b) of the body (10) of the connection profile (1) is inferiorly profiled in such a way as to have a bifurcated portion comprising an upper branch, which consists of the outer lip (17) which delimits the narrowed mouth of the groove (103), and a second lower branch that is disposed in backward position with respect to the first branch and acts as a drip appendage (170) from which the product applied to the connection profile (1) during the painting or sandblasting of the box (Z) drips.

The drip appendage (170) is disposed in backward position with respect to the outer lip (17) so as not to come into contact with the sheet (E), thus preventing any product drips from visually solidifying at the points of contact between the connection profile (1) and the sheet (E).

Obviously, once the box (100) has been painted or sandblasted, the rods (T) can be axially removed from the grooves (103) so that the sheets (E) can be taken away and then reused to protect other boxes.

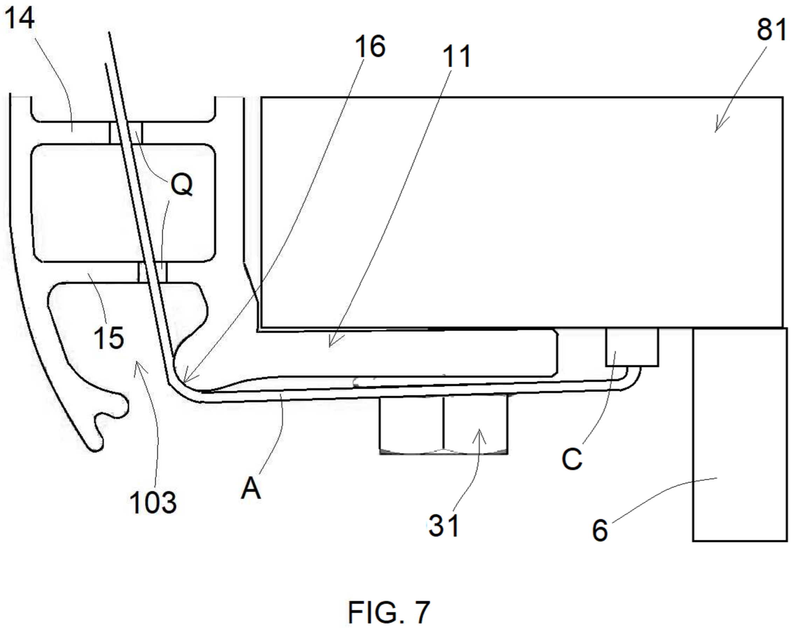

With reference to Fig. 7, the shape of the connection profile (1) allows for the passage of the tensioning straps (A), which in turn pass through cavities, channels, and internal passages provided on the longitudinal side walls (7) of the box (100), more precisely on the profiles (71) that form the longitudinal side walls (7).

In particular, the upper partition (14) and the lower partition (15) have a thickness (s1, s2) such that the two partitions (14, 15) can be drilled, for example using a drill or a perforating tool, to make holes (Q) for the passage of the tensioning straps (A) inside the connection profile (1).

Specifically, the tensioning straps (A) fixed on one side to the cover (B) and tensioned on the other side by means of the tensioning means (C) pass through the groove (103) of the connection profile (1), through the holes (Q) drilled in the partitions (14, 15) and through the passages, channels, and cavities provided inside the profiles (71) that form the longitudinal side walls (7).

In such a configuration, the tensioning straps (A) use the inner lip (16) that internally delimits the narrow opening of the groove (103) of the body (10) of the connection profile (1) as a return point.

To prevent the tensioning straps (A) from coming into contact with sharp elements located under the crosspieces (81) that could tear the tensioning straps (A), the inner lip (16) protrudes from the lower shelf (11) and has a rounded surface.

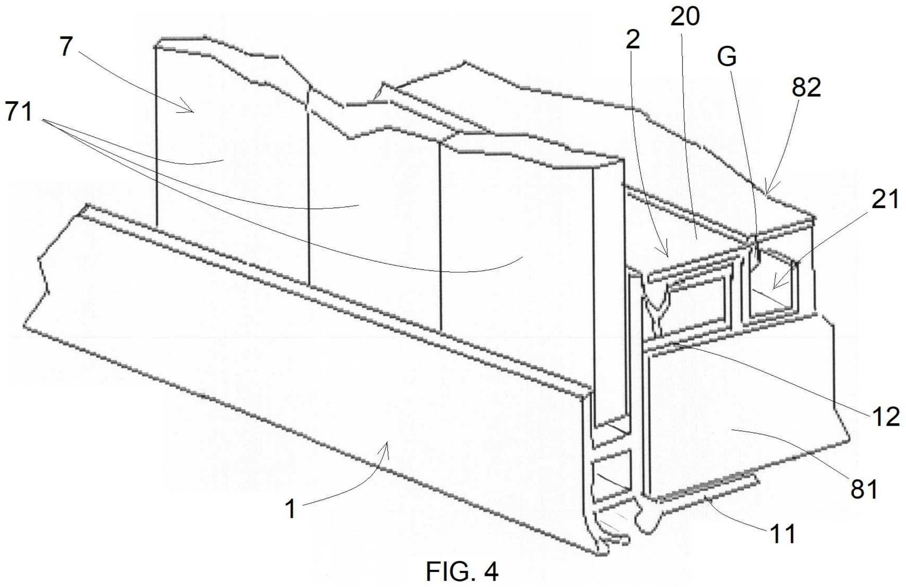

Returning now to Figs. 3 and 4, for each connection profile (1), the new box (100) according to the invention adopts a protection profile (2) comprising a flat portion (20) located above the upper shelf (12), more precisely above the additional shelf (13), to prevent elements, such as the holes for the threaded connection means (30) or seats for load anchoring rings provided on the upper shelf (12) and/or on the additional shelf (13) from being exposed to the load contained inside the box (100).

The flat portion (20) has an upper face (201) that is positioned at a lower height than the upper face (820) of the floor (82) so that the load arranged on the floor (82) and sliding over the floor (82) does not rest or slide over the flat portion (20) of the protection profile (2).

The floor (82) has two lateral end sections (821), each facing a respective protection profile (2) and whereon a seal (G) is provided and pressed between the protection profile (2) and the lateral end section (821) of the floor (82) to prevent granules or liquids from the load contained in the box (100) from seeping between the lateral end section (821) of the floor (82) and the protection profile (2) and falling onto the crosspieces (81) below.

However, the applicant has found out that the seals (G) tend to deteriorate over time, losing their ability to seal against liquids. Therefore, to prevent the liquids passing through the seal (G) from falling onto the crosspieces (81), the applicant has provided the protection profile (2) with a collection portion (21) arranged under the lateral end section (821) of the floor (82) which is suitable for collecting the liquids passing through the seal (G).

When viewed in cross-section, the collection portion (21) has a substantially U-shape comprising:
- a first section (211) protruding downwards at right angle from the flat portion (20) of the protection profile (2),
- a second section (212) connected at right angle to the first section (211); and
- a third section (213) protruding at right angle upwards from the second section (211) parallel to the first section (211).

The third vertical section (213) of the collection portion (21) is surmounted by the lateral end section (821) of the floor (82), whereas the seal (G) abuts against the first section (211) of the collection portion (21).

Numerous modifications can be made to the present embodiment of the invention, which are within the reach of an expert of the field and fall in any case within the scope of the invention as disclosed by the attached claims.

## Claims

1. Trailer box (100) comprising:
- a lower structure (8) comprising crosspieces (81) suitable for being fixed above a chassis (6) of the trailer and having end sections (810) suitable for protruding laterally with respect to the chassis (6); wherein said lower structure (8) also comprises a floor (82) mounted on the crosspieces (81);
- two opposite longitudinal side walls (7);
- two metal connection profiles (1), each one connecting a longitudinal side wall (7) to the end sections (810) of the crosspieces (81); wherein each connection profile (1) has a body (10) comprising an upward-facing groove (101) wherein a lower end of a corresponding longitudinal side wall (7) is inserted and welded; wherein said connection profile (1) comprises a first face (1a) facing the interior of the box (100) and a second face (1b) facing the exterior of the box (100); wherein each connection profile (1) comprises a lower shelf (11) and an upper shelf (12) which protrude from the first face (1a) of the connection profile (1) and between which the end sections (810) of the crosspieces (81) are inserted; and
- connection means (3) connecting the shelves (11, 12) of each connection profile (1) to the end sections (810) of the crosspieces (81);
wherein the connection means (3) comprise removable threaded connection means (30) applied between the shelves (11, 12) of each connection profile (1) and the end sections (810) of the crosspieces (81); and
wherein each crosspiece (81) comprises:
- a lower portion (8a) having a flat surface against which the lower shelf (11) of the connection profile (1) is suitable for abutting;
- an upper portion (8b) having a flat surface against which the upper shelf (12) of the connection profile (1) is suitable for abutting;
- an upper seat (86) which is located under the upper portion (8b) of the crosspiece (81) and extends for the entire length of the crosspiece (81); and
- a lower seat (85) which is located above the lower portion (8a) of the crosspiece (81) and extends for the entire length of the crosspiece (81);
wherein said removable threaded connection means (30) comprise:
- lower threaded blocks (41) inserted into the lower seats (85) of the crosspieces (81), each having a threaded hole (410);
- upper threaded blocks (42) inserted inside the upper seats (86) of the crosspieces (81), each having a threaded hole (420);
- lower screws (31), each having a threaded shank (312) that passes through the lower shelf (11) of the connection profile (1) and the lower portion (8a) of the crosspiece (81) and is screwed into the threaded hole (410) of a respective lower threaded block (41);
- upper screws (32), each having a threaded shank (322) that passes through the upper shelf (12) of the connection profile (1) and the upper portion (8b) of the crosspiece (81) and is screwed into the threaded hole (420) of a respective upper threaded block (42).

2. The box (100) according to claim 1, wherein:
the upper portion (8b) has two holes (F82) drilled at the two end sections (810) of the crosspiece (81), both of which communicate with the upper seat (86).
the lower portion (8a) has a longitudinal channel (c82) in communication with the lower seat (85) of the crosspiece (81) which extends for the entire length of the crosspiece (81);
wherein holes (F1, F2) are drilled in the shelves (11, 12) of the connection profile (1);
wherein the holes (F2) drilled on the upper shelf (12) are coaxial to the holes (F82) drilled on the upper portions (8b) of the crosspieces (81).
wherein the holes (F1) drilled on the lower shelf (11) are aligned with the longitudinal channels (c82) formed on the lower portions (8a) of the crosspieces (81);
wherein the threaded shank (312) of each lower screw (31) passes through the hole (F1) drilled on the lower shelf (11) of the connection profile (1) and the longitudinal channel (c82) of the lower portion (8a) of the crosspiece (81);
wherein the threaded shank (322) of each upper screw (32) passes through the hole (F2) drilled on the upper shelf (12) of the connection profile (1) and the hole (F2) of the upper portion (8b) of the crosspiece (81).

3. The box (100) according to claim 1 or 2, wherein:
- wherein the body (10) of the connection profile (1) comprises a protruding portion (18) that protrudes from the first face (1a) of the connection profile above and close to the lower shelf (11); said protruding portion (18) comprising a flat stop face (180) suitable for abutting against the end sections (810a) of the crosspieces (81);
- the upper shelf (12) extends orthogonally with respect to the plane whereon the stop face (180) of the protruding portion (18) lies; and
- the lower shelf (11) is inclined by an acute angle (α) with respect to the plane whereon the stop face (180) of the protruding portion (18) lies when the lower shelf (11) is not tightened;
wherein said lower shelf (11) is bent during use, following the tightening of the threaded connection means (30), with a consequent gradual increase of said angle (α) with respect to the value assumed by the same angle (α) when the lower shelf (11) is not tightened, and with a consequent inclination of said body (10) towards the interior of the box (100) in such a way that the longitudinal side wall (7) integral with said body (10) is arranged on a subvertical plane inclined towards the interior of the box (100).

4. The box (100) according to claim 3, wherein said angle (α) is comprised between 88° and 89.6° when the lower shelf (11) is not tightened.

5. The box (100) according to any of the preceding claims, wherein said body (10) of the connection profile (1) comprises:
- an inner side wall (10a) whereon the first face (1a) of the body (10) is formed;
- an outer side wall (10b) whereon the second face (1b) of the body (10) is formed;
- at least one transverse partition (14, 15) connecting the inner side wall (10a) and the outer side wall (10b) to each other;
wherein said inner side wall (10a), said outer side wall (10b) and said at least one transverse partition (14, 15) delimit the groove (101).

6. The box (100) according to claim 5, wherein holes (Q) are drilled in said at least one transverse partition (14, 15) for the passage of tensioning straps (A) inside the connection profile (1).

7. The box (100) according to any of the preceding claims, wherein said body (10) of the connection profile (1) comprises a groove (103) having a narrow longitudinal access opening which faces in the opposite direction to the direction of the groove (101) and which is delimited by an inner lip (16) and an outer lip (17).

8. The box (100) according to claim 7, wherein a drip appendage (170) is provided under said outer lip (17) in backward position with respect to the outer lip (17).

9. The box (100) according to claim 7 or 8, wherein said inner lip (16) protrudes downwardly relative to the lower shelf (11) and has a rounded surface.

10. The box (100) according to any of the preceding claims, comprising a protection profile (2) for each connection profile (1), said protection profile (2) comprising a flat portion (20) located above the upper shelf (12); wherein said flat portion (20) has an upper face (201) arranged at a lower level than an upper face (820) of the floor (82).

11. The box (100) according to claim 10, wherein the floor (82) has two lateral end sections (821), each facing a respective protection profile (2) and whereon a seal (G) is provided and compressed between the protection profile (2) and the lateral end section (821) of the floor (82) to prevent granules or liquids from the load contained in the box (100) from infiltrating between the lateral end section (821) of the floor (82) and the protection profile (2) and falling onto the crosspieces (81) below.

12. The box (100) according to claim 11, wherein said protection profile (2) comprises a collection portion (21) positioned below the lateral end section (821) of the floor (82) for collecting any liquids that pass through the seal (G).

13. Trailer comprising:
- a chassis (6) supported by wheels (R); and
- a box (100) according to any of the preceding claims mounted on the chassis (6).
